(19) Europäisches Patentamt
European Patent Office
Office européen des brevets

(11) **EP 3 465 654 B1**

(12) **EUROPÄISCHE PATENTSCHRIFT**

(45) Veröffentlichungstag und Bekanntmachung des Hinweises auf die Patenterteilung:
**22.11.2023 Patentblatt 2023/47**

(21) Anmeldenummer: **17717708.6**

(22) Anmeldetag: **13.04.2017**

(51) Internationale Patentklassifikation (IPC):
*G08G 1/056* (2006.01)  *G08G 1/16* (2006.01)
*G08G 1/01* (2006.01)  *G01C 21/30* (2006.01)

(52) Gemeinsame Patentklassifikation (CPC):
**G08G 1/0112; G08G 1/0133; G08G 1/0145; G08G 1/056; G08G 1/164**

(86) Internationale Anmeldenummer:
**PCT/EP2017/059006**

(87) Internationale Veröffentlichungsnummer:
**WO 2017/211490 (14.12.2017 Gazette 2017/50)**

(54) **VERFAHREN, VORRICHTUNG UND SYSTEM ZUR FALSCHFAHRERERKENNUNG**

METHOD, DEVICE AND SYSTEM FOR DETECTING WRONG-WAY DRIVERS

PROCÉDÉ, DISPOSITIF ET SYSTÈME POUR DÉTECTER DES VÉHICULES CIRCULANT À CONTRE-SENS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2016 DE 102016210029**

(43) Veröffentlichungstag der Anmeldung:
**10.04.2019 Patentblatt 2019/15**

(73) Patentinhaber: **Robert Bosch GmbH**
**70442 Stuttgart (DE)**

(72) Erfinder: **GEISLER, Simon**
**74072 Heilbronn (DE)**

(56) Entgegenhaltungen:
DE-A1-102011 120 497    DE-A1-102012 208 974
US-A1- 2012 290 150    US-A1- 2013 304 374

- **TAO JUNLI ET AL: "Wrong Roadway Detection for Multi-lane Roads", 27. August 2013 (2013-08-27), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 50 - 58, XP047038828, ISSN: 0302-9743 ISBN: 978-3-540-76785-5 das ganze Dokument**
- **F Peyet ET AL: "Lane-level positioning for cooperative systems using EGNOS and enhanced digital maps", , 31. März 2008 (2008-03-31), XP055393844, Gefunden im Internet: URL:http://www.um.es/gsi/research_lines/its/files/ENC_GNSS08.pdf [gefunden am 2017-07-26]**
- **SCHINDLER ANDREAS: "Vehicle self-localization with high-precision digital maps", 2013 IEEE INTELLIGENT VEHICLES SYMPOSIUM (IV), IEEE, 23. Juni 2013 (2013-06-23), Seiten 141-146, XP032502004, ISSN: 1931-0587, DOI: 10.1109/IVS.2013.6629461 [gefunden am 2013-10-10]**

EP 3 465 654 B1

**Beschreibung**

Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Falschfahrer ("Geisterfahrer") verursachen im Falle eines Unfalls zumindest erheblichen Sachschaden. Die Erkennung alleine auf Basis des Navigationsgerätes (Straßenklasse und -richtung) ist für die meisten Fälle zu spät, d.h. der Falschfahrer befindet sich bereits (mit hoher Fahrgeschwindigkeit und großer Wahrscheinlichkeit einer Kollision) auf der falschen Fahrbahn.

Die Schrift von TAO JUNLI ET AL: "Wrong Roadway Detection for Multi-lane Roads", 27. August 2013 (2013-08-27), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 50 - 58, ISSN: 0302-9743, ISBN: 978-3-540-76785-5) offenbart ein auf einem Partikelfilter basierendes Falschfahrerwarnssystem.

Offenbarung der Erfindung

Vor diesem Hintergrund werden mit dem hier vorgestellten Ansatz ein Verfahren, weiterhin eine Vorrichtung und ein System zur Falschfahrererkennung, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Eine beispielsweise cloud-basierte Falschfahrerwarnung kann vorteilhafterweise mit einer speziell auf den Anwendungsfall angepassten Erkennung mit einem Partikel-Filter realisiert werden.

Bei dem Fahrzeug kann es sich um ein Straßenfahrzeug handeln. Unter einer Falschfahrt kann eine Fahrt des Fahrzeugs auf einer Straße entgegen einer vorgeschriebenen Fahrtrichtung verstanden werden. Die gemessene Position wird unter Verwendung eines in dem Fahrzeug angeordneten Sensors gemessen. Die Mehrzahl von Partikeln können unter Verwendung eines mit bekannten Partikel-Filtern verwendeten Verfahrens bestimmt werden. Die Partikel können dabei unterschiedliche angenommene Positionen aufweisen, die beispielsweise um die gemessene Position gruppiert sind. Unter einem plausiblen Straßenabschnitt wird ein Straßenabschnitt verstanden, von dem nach Auswertung der vorhandenen Daten angenommen wird, dass sich das Fahrzeug darauf befindet. Der plausible Straßenabschnitt kann anstelle der gemessenen Position zur Erkennung einer Falschfahrt des Fahrzeugs verwendet werden.

Das Verfahren umfasst somit einen Schritt des Bestimmens eines Falschfahrtsignals unter Verwendung des plausiblen Straßenabschnitts. Dabei zeigt das Falschfahrtsignal an, ob eine Falschfahrt des Fahrzeugs vorliegt oder nicht vorliegt. Beispielsweise kann das Falschfahrtsignal nur dann bereitgestellt werden, wenn eine Falschfahrt angenommen wird.

Im Schritt des Bestimmens des plausiblen Straßenelements können in einem geringen Abstand zueinander verlaufende Straßenelemente aus der Menge von Straßenelementen aus der Bestimmung des zumindest einen plausiblen Straßenelements ausgeschossen werden. Auf diese Weise können solche Straßenelemente, die erfahrungsgemäß zu Fehlern führen, ausgeschlossen werden.

Auch können im Schritt des Bestimmens des plausiblen Straßenelements in einem geringen Abstand zueinander verlaufende Straßenelemente aus der Menge von Straßenelementen bei der Bestimmung des zumindest einen plausiblen Straßenelements als ein zusammengefasstes Straßenelement verwendet werden. Ein solches zusammengefasstes Straßenelement kann als ein in beide Fahrtrichtungen befahrbares Straßenelement bestimmt werden. Auf diese Weise kann auch dann ein plausibles Straßenelement bestimmt werden, wenn nicht sicher bestimmt werden kann, auf welchem in einem geringen Abstand zueinander verlaufenden Straßenelemente sich ein Fahrzeug befindet. Zudem kann eine fälschliche Bereitstellung eines Falschfahrtsignals vermieden werden, da dem zusammengefassten Straßenelement keine Richtungsangabe zugeordnet ist.

Dabei kann das Verfahren einen Schritt des Ausschließens der in einem geringen Abstand zueinander verlaufenden Straßenelemente aus der Menge von Straßenelementen umfassen. Dabei können solche Straßenelemente ausgewählt werden, die in einem Mündungsbereich einer weiteren Straße angeordnet sind. Auf diese Weise können Mündungsbereiche bei der Falschfahrererkennung ausgeschlossen werden, da hier eine zuverlässige Erkennung eines Falschfahrers schwierig ist. Ein solcher Mündungsbereich erstreckt sich beispielsweise ausgehend von der weiteren Straße, beispielsweise einer Landstraße, über die ersten Meter einer Abfahrt oder Auffahrt zu einer Schnellstraße, wie einer Autobahn.

Zusätzlich oder alternativ können solche Straßenelemente ausgewählt werden, die in einem Abstand von weniger als 10 Metern nebeneinander verlaufen. Bei einem so geringen Abstand ist es ebenfalls schwierig sicher zu entscheiden, auf welchem der beiden Straßenelemente sich ein Fahrzeug befindet.

Im Schritt des Einlesens können die Positionsdaten über eine Schnittstelle einer Rechnerwolke, einer sogenannten Cloud, eingelesen werden. Dies ermöglicht eine cloud-basierte Lösung.

Eine entsprechende Vorrichtung zur Falschfahrererkennung ist eingerichtet, um Schritte des genannten Verfahrens in entsprechenden Einheiten auszuführen. Beispielsweise kann eine solche Vorrichtung eine Einleseeinrichtung aufweisen, die ausgebildet ist, um Positionsdaten über eine Schnittstelle einzulesen, eine weitere Einleseeinrichtung aufweisen, die ausgebildet ist, um Kartendaten einzulesen, die eine Menge von Straßenelementen eines von dem Fahrzeug befahrbaren Straßennetz abbilden, eine Bestimmungseinrichtung aufweisen, die ausgebildet ist, um eine Mehrzahl von Partikeln unter Verwendung der Positionsdaten zu bestimmen, und eine Bestimmungseinrichtung aufweisen, die ausgebildet ist, um zumindest ein in Bezug auf eine Befahrung durch das Fahrzeug plausibles Straßenelement aus der Menge von Straßenelementen basierend auf der Mehrzahl von Partikeln unter Verwendung eines Partikel-Filters zu bestimmen. Entsprechend kann die Vorrichtung den Partikel-Filter umfassen.

Ein entsprechendes System zur Falschfahrererkennung umfasst zumindest eine Sendeeinrichtung, die in einem Fahrzeug anordenbar oder angeordnet ist, und ausgebildet ist, um Positionsdaten auszusenden, sowie eine genannte Vorrichtung zur Falschfahrererkennung, die ausgebildet ist, um die von der zumindest einen Sendeeinrichtung ausgesendeten Positionsdaten zu empfangen, beispielsweise über eine drahtlose Verbindung.

Ein weiteres System zur Falschfahrererkennung umfasst zumindest eine Sendeeinrichtung, die in einem Fahrzeug anordenbar oder angeordnet ist, und ausgebildet ist, um Positionsdaten auszusenden, wobei die Positionsdaten eine gemessene Position eines Fahrzeugs repräsentieren, und zumindest eine Empfangseinrichtung, die in dem Fahrzeug anordenbar oder angeordnet ist und ausgebildet ist, Daten einer Vorrichtung zu empfangen, welche gemäß dem hier beschriebenen Ansatz zur Falschfahrererkennung dazu ausgebildet ist, um die von der zumindest einen Sendeeinrichtung ausgesendeten Positionsdaten zu empfangen.

Das beschriebene Verfahren kann in Software oder Hardware oder in einer Mischform aus Software und Hardware implementiert sein, beispielsweise in einer Vorrichtung.

Hierzu kann die Vorrichtung zumindest eine Recheneinheit zum Verarbeiten von Signalen oder Daten, zumindest eine Speichereinheit zum Speichern von Signalen oder Daten, und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:

Fig. 1 ein System zur Falschfahrererkennung gemäß einem Ausführungsbeispiel;

Fig. 2 ein Ablaufdiagramm eines Verfahrens zur Falschfahrererkennung gemäß einem Ausführungsbeispiel;

Fig. 3 ein Hidden Markov Chain Model;

Fig. 4 einen Ablauf eines Partikel-Filter-Prozesses gemäß einem Ausführungsbeispiel

Fig. 5 ein System zur Falschfahrererkennung gemäß einem Ausführungsbeispiel;

Fig. 6 ein Fahrzeug gemäß einem Ausführungsbeispiel;

Fig. 7 einen Programmablauf gemäß einem Ausführungsbeispiel;

Fig. 8 einen Programmablauf eines Partikel-Filters gemäß einem Ausführungsbeispiel;

Fig. 9 Straßenelemente gemäß einem Ausführungsbeispiel; und

Fig. 10 Straßenelemente gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

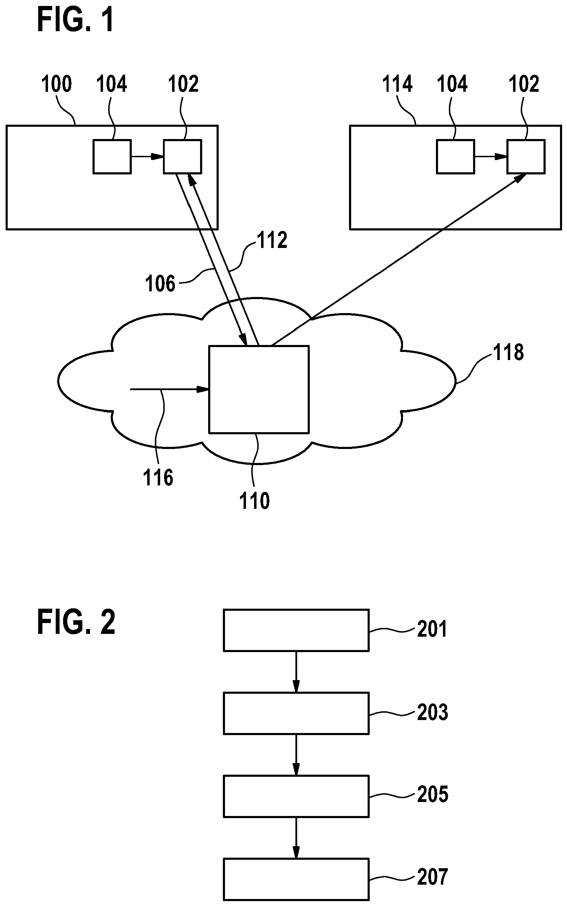

Fig. 1 zeigt ein System zur Falschfahrererkennung gemäß einem Ausführungsbeispiel. Das System umfasst ein Fahrzeug 100, das eine Übertragungseinrichtung 102 aufweist, die ausgebildet ist, um unter Verwendung zumindest einer in dem Fahrzeug 100 angeordneten Sensoreinrichtung 104 erfasste Messdaten 106 drahtlos an eine eine Vorrichtung 110 zur Falschfahrererkennung auszusenden. Die Vorrichtung 110 ist ausgebildet, um die Messdaten 106 zu aufbereiteten Daten aufzubereiten und die aufbereiteten Daten unter Verwendung eines Partikel-Filters weiterzuverarbeiten, um ein Falschfahrtsignal 112 zu erzeugen und auszusenden. Das Falschfahrtsignal 112 zeigt gemäß einem Ausführungsbeispiel an, dass das Fahrzeug 100 dessen Messdaten 106 verarbeitet wurden, aktuell eine Falschfahrt ausführt. Gemäß diesem Ausführungsbeispiel ist sowohl die Übertragungseinrichtung 102 des Fahrzeugs 100 als auch eine Übertragungseinrichtung 102 eines weiteren Fahrzeugs 100 ausgebildet, um das Falschfahrtsignal 112 zu empfangen und ansprechend auf einen Empfang des Falschfahrtsignals 112 eine Warneinrichtung des jeweiligen Fahrzeugs 100, 114 zu aktiveren, die beispielsweise einen Fahrer des jeweiligen Fahrzeugs 100, 114 vor der Falschfahrt warnt oder gemäß einem Ausführungsbeispiel in eine zumindest teilautomatische Steuerung, beispielsweise einer Bremsanlage oder Lenkanlage, des jeweiligen Fahrzeugs 100, 114 eingreift. Gemäß unterschiedlicher Ausführungsbeispiele kann die Übertragungseinrichtung 102 nur als Sendeeinrichtung oder aber als Sende-Empfangseinrichtung ausgeführt sein.

Gemäß einem Ausführungsbeispiel umfassen die Messdaten 106 Positionsdaten, die unter Verwendung einer Positionsbestimmungseinrichtung des Fahrzeugs 100 erfasst wurden und eine aktuelle Position des Fahrzeugs 100 abbilden. Gemäß einem weiteren Ausführungsbeispiel umfassen die Messdaten 106 ferner Bewegungsdaten, die beispielsweise unter Verwendung zumindest eines Beschleunigungssensors des Fahrzeugs 100 erfasst wurden und Informationen über eine aktuelle Bewegung des Fahrzeugs 100, beispielsweise Informationen über eine Fahrtrichtung, eine Längsbeschleunigung, eine Querbeschleunigung oder über eine Drehung des Fahrzeugs um eine Fahrzeugachse umfassen.

Gemäß einem Ausführungsbeispiel ist die Vorrichtung 110 ausgebildet, um Kartendaten 116 einzulesen, die ein von dem Fahrzeug 100 befahrbares Straßennetz abbilden. Gemäß einem Ausführungsbeispiel umfassen die Kartendaten 116 beispielsweise Informationen über Straßenabschnitte des Straßennetzes. Gemäß einem Ausführungsbeispiel umfassen die Kartendaten 116 bezüglich jedes Straßenabschnitts ferner zumindest einen Parameter, der beispielsweise eine Fahrtrichtungsvorgabe für den jeweiligen Straßenabschnitt oder einen Verlauf des jeweiligen Straßenabschnitts definiert. Beispielsweise kann über den Parameter definiert sein, ob der Straßenabschnitt geradlinig verläuft oder eine Kurve beschreibt. Gemäß einer Ausführungsform weist die Vorrichtung 110 eine Speichereinrichtung auf, in der die Kartendaten 116 gespeichert sind.

Gemäß einem Ausführungsbeispiel ist die Vorrichtung 110 oder sind Funktionsblöcke der Vorrichtung 110 in einer Cloud 118 angeordnet oder realisiert.

Gemäß einem Ausführungsbeispiel ist die Vorrichtung 110 ausgebildet, um das Falschfahrersignal 112 unter Verwendung eines plausiblen Straßenelements zu bestimmen. Unter dem plausiblen Straßenelement kann ein von den Kartendaten umfasstes Straßenelement, auch Straßenabschnitt genannt, verstanden werden, von dem angenommen wird, dass sich das Fahrzeug 100 darauf befindet. Die Vorrichtung 110 ist in diesem Fall ausgebildet, um das plausible Straßenelement unter Verwendung eines Partikel-Filters zu bestimmen. Die von dem Partikel-Filter verarbeiteten Partikel werden von der Vorrichtung 110 unter Verwendung der über das Messsignal 106 übertragenen Positionsdaten und/oder bereits vorhandener Partikel bestimmt.

Der beschriebene Ansatz kann ergänzend oder anstelle vielfältige Verfahren zur Detektion eines Falschfahrers verwendet werden, bei denen z.B. der Einsatz einer Videosensorik erfolgt, um das Passieren eines "Einfahrt verboten" Schildes zu detektieren oder der Einsatz einer digitalen Karte in Verbindung mit einer Navigation genutzt wird, um ein Detektieren einer falschen Fahrtrichtung auf einem Straßenabschnitt zu erkennen, der nur in einer Richtung befahrbar ist. Weiterhin bekannt sind. Weiterhin kann der Ansatz mit drahtlosen Verfahren kombiniert werden, die mittels Infrastruktur wie z.B. Baken in der Fahrbahn oder am Fahrbahnrand Falschfahrer detektieren.

Neben der Detektion eines Falschfahrers bietet der beschriebene Ansatz viele Möglichkeiten der Reaktion auf einen Falschfahrer. Beispiele hierfür sind die Warnung des Falschfahrers selbst über ein Display oder akustische Hinweise. Auch können Verfahren angewendet werden, mit denen andere Fahrer in der Nähe eines Falschfahrers gewarnt werden, z.B. über Fahrzeug-Fahrzeug-Kommunikation oder mittels Mobilfunk. Weiterhin ist die Warnung anderer Verkehrsteilnehmer über am Straßenrand aufgestellte Wechselverkehrszeichen möglich. Auch kann ein Eingriff in die Motorsteuerung oder Bremse des falsch fahrenden Fahrzeugs 100 erfolgen.

Der beschriebene Ansatz ermöglicht es, einen Falschfahrer zu detektieren und andere Verkehrsteilnehmer in dessen Nähe noch rechtzeitig zu warnen, wofür nur sehr wenig Zeit zur Verfügung steht.

Der beschriebenen Ansatz greift für eine Falschfahrererkennung (Wrong-Way-Driver-Detection) mit einer Client-Server-Lösung. Als Client ist ein Gerät zu sehen, befindlich an oder in einem Kraftfahrzeug, welches über eine Internetanbindung verfügt und mindestens Zugriff auf Positionskoordinaten hat. Beispielsweise kann es sich dabei um die Übertragungseinrichtung 102 handeln. Bei der Übertragungseinrichtung 102 kann es sich beispielsweise um ein Smartphone handeln. In der Übertragungseinrichtung 102 kann die Sensoreinrichtung 104 integriert sein. Somit kann eine falschfahrerspezifische Server-Client-Kommunikation mit einem Smartphone als beispielhaften Client umgesetzt werden. Das Smartphone kann über ein Mobilfunknetz mit einem Gateway (PDN_GW) an das Internet angeschlossen sein, in dem die Vorrichtung 110, beispielsweise in Form eines Servers, angeordnet sein kann.

Es ergeben sich aus den möglichen Funktionsweisen einer Falschfahrerwarnung mit einer Client-Server-Lösung folgende Schlüsselproblemfelder für diese Technologie, welche durch den hier beschriebenen Ansatz angegangen werden:

a) False-Positive-Reduktion

False-Positives, also Fehldetektionen bei richtiger Fahrweise, müssen bei einer Eigenwarnung und/oder eines aktiven Eingreifens so weit wie möglich vermindert beziehungsweise komplett vermieden werden. Je nach Warnungskonzept müssen die Standards bis zu ASIL-A erfüllen.

b) Zeitkritische Ausführung der Auslösekette

Um die Gefährdung anderer Verkehrsteilnehmer ausgehend von einem Falschfahrer so gering wie möglich zu halten, soll ein Eingreifen bzw. Warnen so schnell wie möglich erfolgen. D. h. die komplette Funktionskette von Detektion einer kritischen Situation über das Erkennen eines Falschfahrers bis zum Eingriff bzw. Warnung soll in einer möglichst geringen Zeitspanne durchlaufen werden. Die Auslastung und somit die nötige Leistungsfähigkeit des Servers, beispielsweise der Vorrichtung 110, bei einem flächendeckenden Einsatz dieser Funktion spielt dabei eine sehr wichtige Rolle. Neben der Auslösezeit stellt auch noch die Wirtschaftlichkeit einen wichtigen Teilaspekt dar.

c) Kommunikation, Dateneffizienz und Stromverbrauch

Die Kommunikation und der Stromverbrauch müssen besonders für mobile Geräte so effizient bzw. gering wie möglich sein, um eine akzeptable Akkulaufzeit zu erreichen. Auch die Überlastung einer Mobilfunkzelle oder anderweitigen drahtlosen Kommunikationseinheit muss durch eine dateneffiziente Kommunikation unterbunden werden. Auch das Datenvolumen und die damit verbunden Kosten sind, soweit es möglich ist einzugrenzen. Die Effizienz der Kommunikation ist aus Rechenleistungsgründen auch serverseitig ein äußerst wichtiger Faktor.

Der beschriebene Ansatz greift vor allem für die Schlüsselfelder a) "False-Positive-Reduktion" und b) "Zeitkritische Ausführung der Auslösekette", aber auch c) "Kommunikation, Dateneffizienz und Stromverbrauch" wird gegebenenfalls davon beeinflusst. Die Erkennung von Falschfahrern in der Cloud 118, basierend auf handelsüblicher Smartphone-und Connectivity-Control-Unit-Sensorik ist kein triviales Unterfangen.

Fig. 2 zeigt ein Ablaufdiagramm eines Verfahrens zur Falschfahrererkennung gemäß einem Ausführungsbeispiel. Das Verfahren kann beispielsweise unter Verwendung von Einrichtungen der anhand von Fig. 1 gezeigten Vorrichtung zur Falschfahrererkennung ausgeführt werden.

Das Verfahren umfasst einen Schritt 201, in dem Positionsdaten über eine Schnittstelle eingelesen werden. Die Positionsdaten stellen eine gemessene Position eines Fahrzeugs dar. In einem Schritt 203 werden Kartendaten eingelesen, die eine Menge von Straßenelementen eines von dem Fahrzeug befahrbaren Straßennetz abbilden. In einem Schritt 205 wird eine Mehrzahl von Partikeln unter Verwendung der Positionsdaten bestimmt. Dabei repräsentiert jeder der Partikel je eine angenommene Position des Fahrzeugs und eine der angenommenen Position zugeordnete Gewichtung. Dabei verteilen sich die angenommenen Positionen gemäß einem Ausführungsbeispiel um die gemessene Position. In einem Schritt 207 wird basierend auf der Mehrzahl von Partikeln zumindest ein in Bezug auf eine Befahrung durch das Fahrzeug plausibles Straßenelement aus der Menge von Straßenelementen bestimmt. Zumindest der Schritt 207 wird unter Verwendung eines Partikel-Filters ausgeführt. Beispielsweise kann ein Straßenelement abhängig von einer örtlichen Verteilung der Partikel oder den Gewichtungen der Partikel als ein plausibles Straßenelement bestimmt werden. Dazu kann beispielsweise überprüft werden, ob sich auf dem Straßenelement eine vorbestimmte Menge von Partikeln befindet oder sich auf dem Straßenelement Partikel mit einer vorbestimmten Gewichtung befinden.

Im Schritt 207 können Straßenelemente, die ein vorbestimmtes Kriterium erfüllen, bei der Bestimmung des plausiblen Straßenelements ausgeschlossen werden. Dabei handelt es sich gemäß einem Ausführungsbeispiel beispielsweise um Straßenelemente, die näher als ein vorgegebener Referenzabstand beieinanderliegen oder um Straßenelemente, die sich in einem Mündungsbereich einer Schnellstraße befinden. Der Mündungsbereich kann beispielsweise einen Bereich kennzeichnen, in dem eine Auffahrt und eine Abfahrt einer Schnellstraße in eine weitere Straße, beispielsweise eine Landstraße, münden. Der Mündungsbereich kann beispielsweise eine vorbestimmte Länge aufweisen, die ausgehend von der weiteren Straße gemessen wird. Zusätzlich oder alternativ kann der Mündungsbereich so lang gewählt werden, wie die Auffahrt und die Abfahrt zumindest annähernd parallel verlaufen. Somit kann der Schritt 207 einen Schritt umfassen, in dem überprüft wird, ob zwei in eine weitere Straße mündende Straßenelemente zumindest annähernd parallel zueinander verlaufen. Wenn dies der Fall ist, können diese Straßenelemente bei der Bestimmung des plausiblen Straßenelements ausgeschlossen werden.

In einem weiteren Schritt wird gemäß einem Ausführungsbeispiel ein Falschfahrersignal bereitgestellt. Beispielsweise wird das Falschfahrersignal bereitgestellt, wenn eine aktuelle Fahrtrichtung des Fahrzeugs nicht mit einer Fahrtrichtungsvorgabe des plausiblen Straßenabschnitts übereinstimmt.

Für die Falschfahrererkennung ist es nicht ausschlaggebend, welche Route der Falschfahrer gefahren ist. Die benötigte Information ist vor allem, wo sich der Falschfahrer aktuell befindet und ob dieser einen Straße entgegen der Fahrtrichtung befährt. Für diese Ermittlung wird selbstverständlich die Historie benötigt, doch diese ist nicht Teil der Fragestellung, sondern vielmehr der Weg zum Ergebnis.

Aufgrund dieser Umstände wird ein Verfahren basierend auf einem Partikel-Filter vorgestellt. Der Partikel-Filter ist ähnlich wie der Kalman-Filter auf Systeme anwendbar, die einer Hidden-Markov-Chain-Charakteristik, also einer Markow-Kette mit unbeobachteten Zuständen, unterliegen:

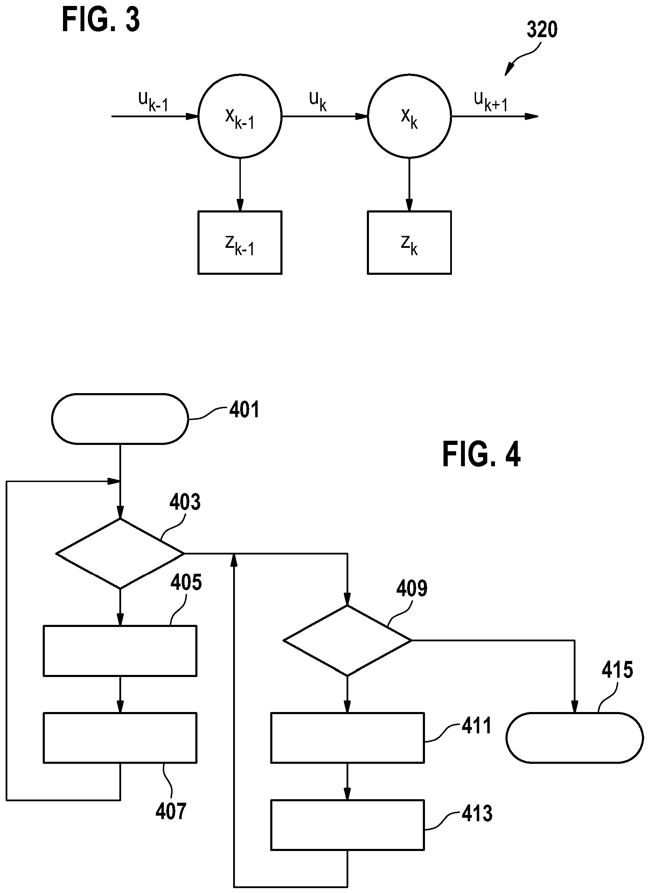

Fig. 3 zeigt ein Hidden Markov Chain Model 320 mit Zustand x und Beobachtung z zur Zeit k und k-1.

Das heißt, der Zustand eines Systems kann nicht direkt gemessen werden, jedoch aufgrund von anderen Observierungen geschätzt werden. In diesem Fall gilt es, die Position und somit die aktuelle Straße zu schätzen. Dafür muss folgende Gleichung gelöst werden:

$$p(x_k|z_{0:k}, u_{0:k}) = \eta \cdot g(z_k|x_k, z_{0:k-1}, u_{0:k})\pi(x_k|z_{0:k-1}, u_{0:k})$$

Der Zustand zum Zeitpunkt k wird im Folgenden mit $x_k$ beschrieben, die vorherigen Zustände werden mit $x_{0:k-1} = (x_0, \ldots, x_{k-1})$ zusammengefasst. Analog zu x gilt diese Konvention auch für die Steuergrößen u und Observierungen u. $\eta$ beschreibt einen Normalisierungsterm, der im Folgenden allerdings keine große Bedeutung hat. Diese Gleichung kann zu folgender Gleichung vereinfacht werden:

$$p(x_k|z_{0:k}, u_{0:k}) = \eta \cdot g(z_k|x_k) \int_{x_{k-1}} f(x_k|x_{k-1}, u_k) \, p(x_{k-1}|z_{0:k}, u_{0:k})dx_{k-1}$$

Und diese in zwei Schritten beschrieben werden: der Vorhersageschritt

$$\pi(x_k|z_{0:k-1}, u_{0:k}) = \int_{x_{k-1}} \underbrace{f(x_k|x_{k-1}, u_k)}_{motion} \, p(x_{k-1}|z_{0:k-1}, u_{0:k})dx_{k-1}$$

und der Gewichtungsterm:

$$p(x_k|z_{0:k}, u_{0:k}) = \eta \cdot \underbrace{g(z_k|x_k, u_k)}_{observations}\pi(x_k|z_{0:k-1}, u_{0:k}) \, ,$$

Bei einem Partikel-Filter wird das Integral über die Wahrscheinlichkeitsverteilungen mit einer numerischen Näherung

$$\pi(x) = \sum_{j=1}^{J} w^{[j]} \delta(x - x^{[j]})$$

und Monte-Carlo-Methoden gelöst. $w^{[j]}$ beschreibt hierbei das Gewicht/ die Wahrscheinlichkeit des j-ten Partikels. Eine Menge von Partikeln wird mit

$$\mathcal{X} = \left\{ (x^{[j]}, w^{[j]}) \right\}_{j=1\ldots J}$$

beschrieben. Somit hat jeder Partikel das Gewicht $w^{[j]}$ und den Zustand $x^{[j]}$.

Fig. 4 zeigt den Ablauf eines Partikel-Filter-Prozesses gemäß einem Ausführungsbeispiel. Dazu ist in Fig. 4 ein Hidden Markov Chain Model mit dem Zustand x und der Beobachtung z zur Zeit k und k - 1 gezeigt.

Ein großer Teil der Arbeit ist eine geeignete Funktion für

$$\underbrace{f(x_k|x_{k-1}, u_k)}_{motion}$$

und

$$\underbrace{g(z_k|x_k, u_k)}_{observations}$$

zu finden, die das Problem optimal abbilden. Grundlegen hierfür ist es, die zu schätzenden Zustände x zu definieren.

Der Block 401 steht für den Partikel-Filter ($X_{k-1}, u_k, z$) Von dem Block 403 wird solange zu dem Block 405 gesprungen, bis alle Werte j=1:J durchlaufen sind.

In dem Block 405 wird ein neuer Zustand berechnet:

$$\mathcal{X}_k^{[j]} = f(\mathcal{X}_k|\mathcal{X}_{k-1}^{[j]}, u_k)$$

In dem Block 407 wird das Gewicht berechnet:

$$w_k^{[j]} = g(z_k, m_i|\mathcal{X}_k, u_k)$$

Wenn in dem Block 403 alle Werte durchlaufen sind, wird zum Block 409 gesprungen. Von dem Block 409 wird solange zu dem Block 411 gesprungen, bis alle Werte i=1:J durchlaufen sind.

In dem Block 411 wird ein ein Wert gemäß $w_k^{[i]}$ gezeichnet.

In dem Block 413 wird zu dem Partikelsatz hinzuaddiert gemäß $x_k^{[i]} \rightarrow \mathcal{X}_k$.

Wenn in dem Block 409 alle Werte durchlaufen sind, wird zum Block 415 gesprungen der das Ende $X_k$ darstellt.

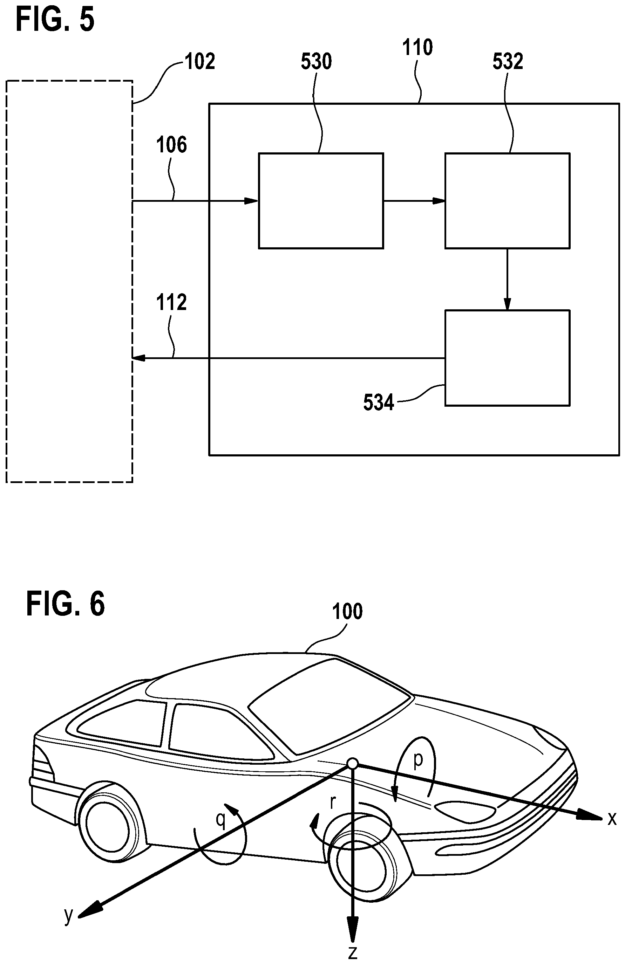

Fig. 5 zeigt ein System zur Falschfahrererkennung gemäß einem Ausführungsbeispiel. Das System umfasst Geräte 102, beispielsweise in Form der anhand von Fig. 1 genannten Übertragungseinrichtungen und eine Vorrichtung 110 zur Falschfahrererkennung, die gemäß diesem Ausführungsbeispiel als ein sogenannter WDW-Server ausgeführt ist. Die Vorrichtung 110 ist ausgebildet, um von dem Gerät 102 Daten 106, beispielsweise die anhand von Fig. 1 beschriebenen Messdaten zu empfangen und basierend auf den Daten 106 eine Warnung 112 bereitstellen und beispielsweise in Form des anhand von Fig. 1 beschriebenen Falschfahrtsignals zurück an die Geräte 102 zu senden.

Die Vorrichtung weist eine Einrichtung 530 zur Vorverarbeitung, einen Partikel-Filter 532 und ein Warnungsmodul 534 auf.

In einer vereinfachten Architektur einer cloud-basierten Falschfahrerwarnung bettet sich der Partikel-Filter 532 wie in Fig. 5 gezeigt ein.

Mit dem Partikel-Filter 532 kann die Wahrscheinlichkeitsverteilung der Position des Autos näherungsweise bestimmt werden.

Fig. 6 zeigt anhand eines Fahrzeugs 100 Werte, die in das anhand von Fig. 5 gezeigte Modell einfließen können. Bei den Werten kann es sich beispielsweise um Zustände in Richtung der Längsachse x, der Querachse y, der Hochachse z sowie ein Rollen p um die Längsachse, ein Nicken q um die Querachse und ein Gieren r um die Hochachse handeln.

Bezüglich eines Kartenabgleichs unter Verwendung des Partikel-Filters gilt für den Bayes-Filter $p(x_k|z_{0:k},u_{0:k})$. Hierbei kann unter Bezugnahme auf Fig. 3 $x_k$ dafür stehen, was der Zustand (nicht gemessen) ist, beispielsweise die geografische Länge, Breite und Höhe, $u_{k+1}$ dafür stehen, wie sich das Auto 100 bewegt, beispielsweise hinsichtlich der Geschwindigkeit und Drehraten und $z_k$ dafür stehen, was observiert werden kann, beispielsweise ein GPS-Signal oder ein das Umfeld des Fahrzeugs 100 betreffendes Signal (Kamera, etc.)

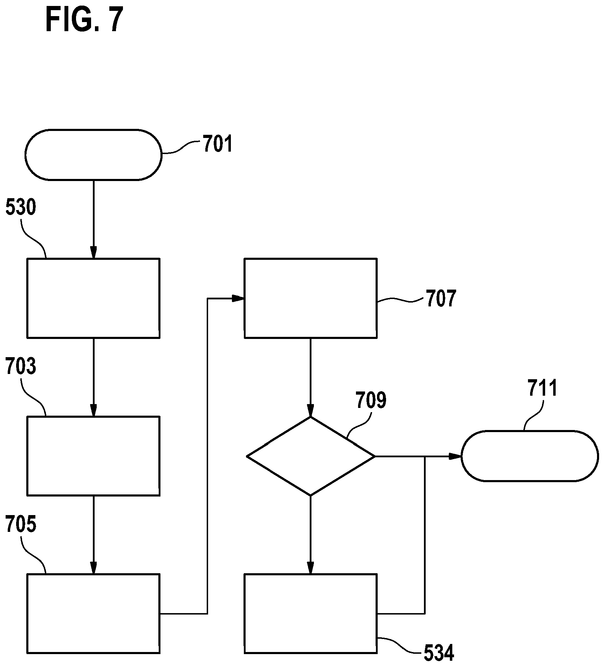

Fig. 7 zeigt einen Programmablauf gemäß einem Ausführungsbeispiel. Der Ablauf startet mit einem Block 701. In einem Block 530 wird eine Datenvorverarbeitung durchgeführt, wie es beispielsweise anhand von Fig. 5 beschrieben ist. In einem Block 703 wird, falls vorhanden, der Zustand vom vorherigen Punkt geladen. In einem Block 705 findet ein Kartenabgleich (mapmatching) mit dem Partikel-Filter statt. In einem Block 707 erfolgt eine Interpretation der Ergebnisse. In einem Block 709 wird geprüft, ob eine Falschfahrt vorliegt. Wenn dies der Fall ist, wird in einem Block 534 eine Warnung versendet, wie es beispielsweise anhand von Fig. 5 beschrieben ist. Wenn keine Falschfahrt vorliegt, erfolgt das Ende des Programmablaufs mit einem Block 711.

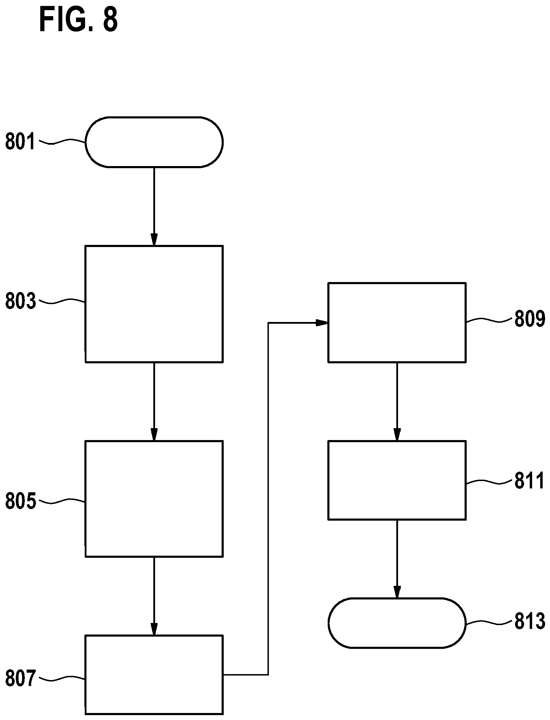

Fig. 8 zeigt einen Programmablauf eines Partikel-Filters gemäß einem Ausführungsbeispiel. Ein Block 801 steht für einen Beginn des Partikel-Filters. In einem Block 803 erfolgt ein Verschieben der Partikel unter Berücksichtigung der Sensorungenauigkeit, beispielsweise der anhand von Fig. 1 beschriebenen Sensoreinrichtung. In einem Block 805 erfolgt eine Ermittlung der kartenbezogenen Parameter. Ein solcher Parameter gibt beispielsweise an, ob ein Partikel auf einer Straße liegt oder wie der Titel derselben ist. In einem Block 807 erfolgt eine Berechnung der neuen Partikel-Gewichte. In einem Block 809 erfolgt ein sogenanntes Resampling, bei dem ein Eliminieren der irrelevanten Bereiche und/oder Partikel erfolgt. In einem Block 811 erfolgt eine Interpretation der einzelnen Partikel und in einem Block 813 eine Rückgabe der möglichen Straßen.

Durch die Verwendung des Partikel-Filters werden die im Folgenden genannten Aspekte verbessert. Zum einen wird ein sequenziell (in Echtzeit möglich) arbeitendes Verfahren geschaffen, welches primär die aktuelle Position auf dem Straßennetzwerk ermittelt. Ferner ist eine robuste Schätzung der aktuellen Position auf dem Straßennetzwerk möglich. Eine Unsicherheit über die aktuelle Schätzung ist ermittelbar. Dies ermöglicht es, die Entscheidung über eine potenzielle Falschfahrt zuverlässig, auf ein sinnvolles Maß, verzögern zu können.

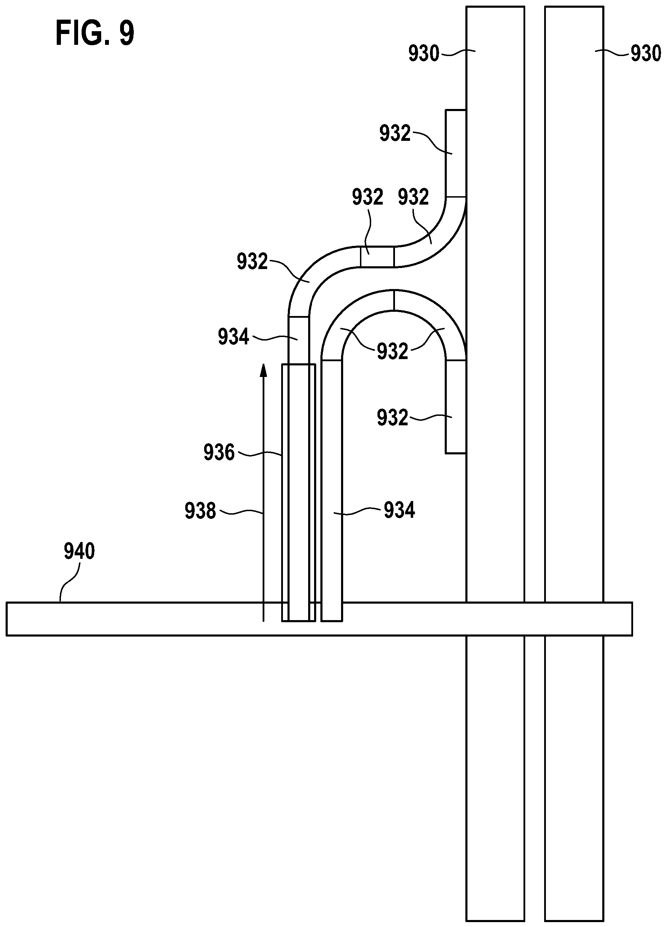

Fig. 9 zeigt eine Darstellung von Straßenelementen 930, 932, 934 gemäß einem Ausführungsbeispiel. Die Straßenelemente 930, 932, 934 sind Teil eines von einem Fahrzeug, beispielsweise dem anhand von Fig. 1 beschriebenen Fahrzeug, befahrbaren Straßennetzes. Die beiden Straßenelemente 930 stellen eine Autobahn dar, wobei das links dargestellte der Straßenelemente 930 eine oder mehrere Fahrbahnen für eine erste Fahrtrichtung und das rechts dargestellte der Straßenelemente 930 eine oder mehrere Fahrbahnen für eine entgegengesetzte zweite Fahrtrichtung darstellen. Die Straßenelemente 932, 934 stellen Abschnitte einer Auffahrt und einer Abfahrt für die durch die Straßenelemente 930 dargestellte Autobahn dar. Die beiden Straßenelemente 934 befinden sich dabei in einem Mündungsbereich 936, der durch eine vorgegebene Länge 938, beispielsweise einer Länge x in Metern, definiert ist. Die vorgegebene Länge 938 wird dabei ausgehend von einem Beginn der Auffahrt oder einem Ende der Abfahrt angesetzt, die üblicherweise dicht beieinander liegen. In dem Mündungsbereich 936 verlaufen die Straßenelemente 934 dicht nebeneinander, sodass hier nur schwer erkannt werden kann, auf welchem der Straßenelemente 934 sich ein Fahrzeug tatsächlich befindet. Daher ist es sinnvoll, den Mündungsbereich 936 bei der Bestimmung eines plausiblen Straßenelements auszuschließen.

Für die Falschfahrererkennung ist es nicht ausschlaggebend, welche Route der Falschfahrer gefahren ist. Die benötigte Information ist vor allem, wo sich der Falschfahrer aktuell befindet und ob dieser eine Straße entgegen der Fahrtrichtung befährt. Für diese Ermittlung wird selbstverständlich die Historie benötigt, doch diese ist nicht Teil der Fragestellung, sondern vielmehr der Weg zum Ergebnis.

Im Anfangsbereich einer Auffahrt, beispielsweise der Mündungsbereich 936 zu einer Landstraße 940, ist es mit üblicher Sensorik (Auto, Smartphone, ...) nicht möglich den Falschfahrer zuverlässig zu erkennen.

Gemäß einem Ausführungsbeispiel werden daher die ersten Meter 938 der Auffahrt ausgeschlossen. Dafür gibt es zwei verschiedene Ansätze.

In Fig. 9 ist ein erster Ansatz gezeigt, bei dem ein Ausschließen der ersten x Meter 938 einer Autobahnauffahrt in entgegengesetzter Fahrtrichtung erfolgt.

Wie in Fig. 9 gezeigt, verursachen vor allem dicht beieinanderliegende Auf- und Abfahrten 932, 934 von Autobahnen 930, welche an eine Landstraße 940, Bundesstraße, etc. grenzen, große Probleme. Deswegen werden diese Bereiche von der Lösungsmenge der möglichen Straßen 930, 932, 934, auf denen sich ein Fahrzeug momentan befindet, ausgeschlossen. Abgebildet werden kann der Wert x 938 durch das Festlegen einer Konstante oder das Analysieren der beiden hier zumindest annähernd parallelen Straßensegmente 934 und ausschließen des Bereichs 936, in dem beide zumindest fast parallel verlaufen.

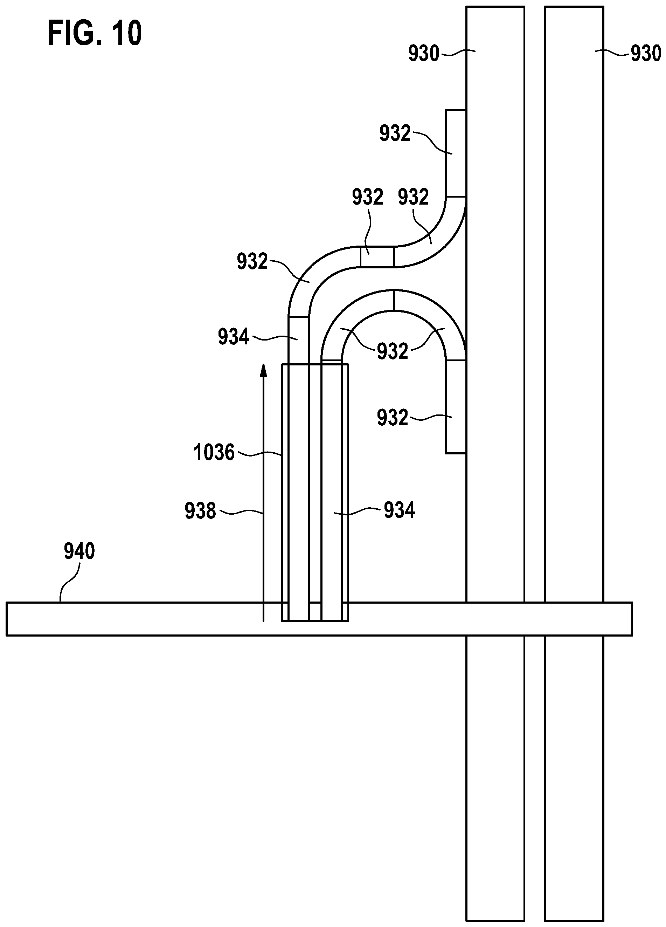

Fig. 10 zeigt eine Darstellung von Straßenelementen 930, 932, 934 gemäß einem Ausführungsbeispiel. Dabei kann es sich um die anhand von Fig. 9 beschriebenen Straßenelemente 930, 932, 934 handeln.

Die beiden Straßenelemente 934 verlaufen ausgehend von der weiteren Straße 940 zumindest zu Beginn zumindest annähernd parallel zueinander. Typischerweise verlaufen die beiden Straßenelemente 934 über eine Länge 938, beispielsweise einer Länge x in Metern, parallel zueinander, die einer Länge des kürzeren der beiden Straßenelemente 934 entspricht. Die Länge 938 wird gemäß diesem Ausführungsbeispiel zur Definition eines zusammengefassten Straßenelements 1036 verwendet.

In Fig. 10 ist ein Ausführungsbeispiel gezeigt, bei dem die ersten Meter 938 der Auffahrt gemäß einem zweiten Ansatz ausgeschlossen werden. Gemäß diesem zweiten Ansatz erfolgt ein Zusammenfassen der ersten x Meter 938 einer Autobahnauffahrt. Alternativ wird derselbe Effekt durch ein Zusammenlegen der einzelnen Straßensegmente 934 im parallelen Bereich bewirkt, wie es in Fig. 10 gezeigt ist. Hier werden die beiden Straßenelemente 934, welche die Auf- und Abfahrt repräsentieren durch das Straßenelement 1036 zusammengefasst, welches somit in beiden Fahrtrichtungen befahren werden darf.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Verfahren zur Falschfahrererkennung, wobei das Verfahren die folgenden Schritte umfasst:

   Einlesen (201) von Positionsdaten (106) über eine Schnittstelle, wobei die Positionsdaten (106) eine unter Verwendung eines in einem Fahrzeug angeordneten Sensors gemessene Position des Fahrzeugs (100) repräsentieren;
   Einlesen (203) von Kartendaten (116), die eine Menge von Straßenelementen (930, 932, 934) eines von dem Fahrzeug (100) befahrbaren Straßennetz abbilden;
   Bestimmen (205) einer Mehrzahl von Partikeln unter Verwendung der Positionsdaten (106), wobei ein Partikel eine angenommene Position des Fahrzeugs (100) und eine der angenommenen Position zugeordnete Gewichtung repräsentiert; und
   Bestimmen (207) zumindest eines in Bezug auf eine Befahrung durch das Fahrzeug (100) plausiblen Straßenelements aus der Menge von Straßenelementen (930, 932, 934) basierend auf der Mehrzahl von Partikeln unter Verwendung eines Partikel-Filters (532), wobei die Schritte des Bestimmens (205, 207) unter Verwendung einer Recheneinheit zum Verarbeiten von Signalen oder Daten ausgeführt werden;
   Bereitstellen eines Falschfahrtsignals (112) unter Verwendung des zumindest einen plausiblen Straßenelements, wobei das Falschfahrtsignal (112) anzeigt, ob eine Falschfahrt des Fahrzeugs (100) vorliegt oder nicht vorliegt,
   **dadurch gekennzeichnet,**
   **dass** im Schritt des Bestimmens (207) des plausiblen Straßenelements in einem geringen Abstand zueinander verlaufende Straßenelemente (934) aus der Menge von Straßenelementen (930, 932, 934) aus der Bestimmung des zumindest einen plausiblen Straßenelements ausgeschlossen werden oder bei der Bestimmung des zumindest einen plausiblen Straßenelements als ein zusammengefasstes Straßenelement (1036) verwendet werden,
   wobei in geringem Abstand zueinander verlaufende Straßenelemente (934) solche sind, die näher als ein vorgegebener Referenzabstand beieinanderliegen oder um Straßenelemente, die sich in einem Mündungsbereich einer Schnellstraße befinden, und
   wobei ein zusammengefasstes Straßenelement (1036) ein in beide Fahrtrichtungen befahrbares Straßenelement ist.

2. Verfahren gemäß Anspruch 1, mit einem Schritt des Ausschließens der in einem geringen Abstand zueinander verlaufenden Straßenelemente (934) aus der Menge von Straßenelementen (930, 932, 934), als in einem Mündungsbereich einer weiteren Straße (940) angeordnete Straßenelemente (934).

**3.** Verfahren gemäß einem der Ansprüche 1 oder 2, mit einem Schritt des Ausschließens der in einem geringen Abstand zueinander verlaufenden Straßenelemente (934) aus der Menge von Straßenelementen (930, 932, 934), als die in einem Abstand von weniger als 10 Metern nebeneinander verlaufenden Straßenelementen (934).

**4.** Verfahren gemäß einem der vorangegangenen Ansprüche, bei dem im Schritt des Einlesens (201) die Kartendaten (116) über eine Schnittstelle einer Rechnerwolke (118) eingelesen werden.

**5.** Vorrichtung (110) zur Falschfahrererkennung, die eingerichtet ist, um Schritte des Verfahrens gemäß einem der vorangegangenen Ansprüche in entsprechenden Einheiten auszuführen.

**6.** System zur Falschfahrererkennung, wobei das System die folgenden Merkmale umfasst:

zumindest eine Sendeeinrichtung (102), die in einem Fahrzeug (100) anordenbar oder angeordnet ist, und ausgebildet ist, um Positionsdaten (106) auszusenden, wobei die Positionsdaten (106) eine gemessene Position eines Fahrzeugs (100) repräsentieren; und
eine Vorrichtung (110) gemäß Anspruch 5 zur Falschfahrererkennung, die ausgebildet ist, um die von der zumindest einen Sendeeinrichtung (102) ausgesendeten Positionsdaten (106) zu empfangen.

**7.** Computerprogramm, das dazu eingerichtet ist, das Verfahren gemäß einem der vorangegangenen Ansprüche auszuführen.

**8.** Maschinenlesbares Speichermedium, auf dem das Computerprogramm nach Anspruch 7 gespeichert ist.

**Claims**

**1.** Method for detecting wrong-way drivers, wherein the method comprises the following steps of:

reading in (201) position data (106) via an interface, wherein the position data (106) represent a position of the vehicle (100) measured using a sensor arranged in a vehicle;
reading in (203) map data (116) representing a set of road elements (930, 932, 934) of a road network that can be used by the vehicle (100);
determining (205) a plurality of particles using the position data (106), wherein a particle represents an assumed position of the vehicle (100) and a weighting associated with the assumed position; and
determining (207) at least one road element from the set of road elements (930, 932, 934), which is plausible with respect to use by the vehicle (100), on the basis of the plurality of particles using a particle filter (532), wherein the determining steps (205, 207) are carried out using a computing unit for processing signals or data;
providing a wrong-way driving signal (112) using the at least one possible road element, wherein the wrong-way driving signal (112) indicates whether or not there is wrong-way driving of the vehicle (100),
**characterized**
**in that**, in the step of determining (207) the plausible road element, road elements (934) from the set of road elements (930, 932, 934) which extend at a short distance from one another are excluded from the determination of the at least one plausible road element or are used as a combined road element (1036) when determining the at least one plausible road element,
wherein road elements (934) extending at a short distance from one another are those road elements which are closer to one another than a predefined reference distance or are road elements which are in a junction area of a motorway, and
wherein a combined road element (1036) is a road element that can be used in both directions of travel.

**2.** Method according to Claim 1, having a step of excluding the road elements (934) extending at a short distance from one another from the set of road elements (930, 932, 934) as road elements (934) arranged in a junction area of a further road (940).

**3.** Method according to either of Claims 1 and 2, having a step of excluding the road elements (934) extending at a short distance from one another from the set of road elements (930, 932, 934) as the road elements (934) extending at a distance of less than 10 metres beside one another.

**4.** Method according to one of the preceding claims, in which, in the reading-in step (201), the map data (116) are read in via an interface of a computer cloud (118).

5. Apparatus (110) for detecting wrong-way drivers, which apparatus is configured to carry out steps of the method according to one of the preceding claims in corresponding units.

6. System for detecting wrong-way drivers, wherein the system comprises the following features:

at least one transmitting device (102) which can be arranged or is arranged in a vehicle (100) and is designed to transmit position data (106), wherein the position data (106) represent a measured position of a vehicle (100); and
an apparatus (110) according to Claim 5 for detecting wrong-way drivers, which apparatus is designed to receive the position data (106) transmitted by the at least one transmitting device (102).

7. Computer program which is configured to carry out the method according to one of the preceding claims.

8. Machine-readable storage medium on which the computer program according to Claim 7 is stored.

**Revendications**

1. Procédé de reconnaissance de véhicule circulant à contresens, le procédé comprenant les étapes suivantes :

lecture (201) de données de position (106) par le biais d'une interface, les données de position (106) représentant une position du véhicule (100) mesurée en utilisant un capteur disposé dans un véhicule ;
lecture (203) de données cartographiques (116), lesquelles représentent un ensemble d'éléments routiers (930, 932, 934) d'un réseau routier pouvant être parcouru par le véhicule (100) ;
détermination (205) d'une pluralité de particules en utilisant les données de position (106), une particule représentant une position supposée du véhicule (100) et une pondération associée à la position supposée ; et
détermination (207) d'au moins un élément routier plausible en référence à un passage du véhicule (100) à partir de l'ensemble d'éléments routiers (930, 932, 934) sur la base de la pluralité de particules en utilisant un filtre à particules (532), les étapes de détermination (205, 207) étant exécutées en utilisant une unité de calcul servant au traitement de signaux ou de données ;
fourniture d'un signal de circulation à contresens (112) en utilisant l'au moins un élément routier plausible, le signal de circulation à contresens (112) indiquant s'il y a ou non présence d'une circulation à contresens du véhicule (100),
**caractérisé en ce que**
à l'étape de détermination (207) de l'élément routier plausible, les éléments routiers (934) qui suivent un tracé à une faible distance les uns des autres sont exclus de l'ensemble d'éléments routiers (930, 932, 934) résultant de la détermination de l'au moins un élément routier plausible ou sont utilisés comme un élément routier regroupé (1036) lors de la détermination de l'au moins un élément routier plausible,
les éléments routiers (934) qui suivent un tracé à une faible distance les uns des autres étant ceux qui sont plus proches les uns des autres qu'une distance de référence prédéfinie ou des étant des éléments routiers qui se trouvent dans une zone de débouché d'une voie rapide, et
un élément routier regroupé (1036) étant un élément routier pouvant être parcouru dans les deux sens de circulation.

2. Procédé selon la revendication 1, comprenant une étape d'exclusion, de l'ensemble d'éléments routiers (930, 932, 934), des éléments routiers (934) qui suivent un tracé à une faible distance les uns des autres en tant qu'éléments routiers (934) disposés dans une zone de débouché d'une route supplémentaire (940).

3. Procédé selon l'une des revendications 1 ou 2, comprenant une étape d'exclusion, de l'ensemble d'éléments routiers (930, 932, 934), des éléments routiers (934) qui suivent un tracé à une faible distance les uns des autres en tant qu'éléments routiers (934) qui suivent un tracé les uns à côté des autres à une distance inférieure à 10 mètres.

4. Procédé selon l'une quelconque des revendications précédentes, avec lequel, dans l'étape de lecture (201), les données cartographiques (116) sont lues par le biais d'une interface d'un nuage informatique (118).

5. Arrangement (110) de reconnaissance de véhicule circulant à contresens, qui est conçu pour exécuter des étapes du procédé selon l'une des revendications précédentes dans des unités correspondantes.

6. Système de reconnaissance de véhicule circulant à contresens, le système comprenant les caractéristiques suivantes :

au moins un dispositif d'émission (102), qui peut être disposé ou est disposé dans un véhicule (100), et qui est configuré pour émettre des données de position (106), les données de position (106) représentant une position mesurée d'un véhicule (100) ; et
un arrangement (110) selon la revendication 5 de reconnaissance de véhicule circulant à contresens, qui est configuré pour recevoir les données de position (106) émises par l'au moins un dispositif d'émission (102).

7. Programme informatique, qui est conçu pour mettre en œuvre le procédé selon l'une des revendications précédentes.

8. Support de stockage lisible par machine sur lequel est stocké le programme informatique selon la revendication 7.

# FIG. 1

100    104    102                        114    104    102

112

106

118

116

110

# FIG. 2

201

203

205

207

## FIG. 3

320

$u_{k-1}$ → $x_{k-1}$ → $u_k$ → $x_k$ → $u_{k+1}$

$z_{k-1}$

$z_k$

## FIG. 4

401

403

405

407

409

411

413

415

## FIG. 5

## FIG. 6

# FIG. 7

## FIG. 8

801

803

805

807

809

811

813

# FIG. 9

FIG. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Wrong Roadway Detection for Multi-lane Roads. **TAO JUNLI et al.** NETWORK AND PARALLEL COMPUTING; [LECTURE NOTES IN COMPUTER SCIENCE; LECT.NOTES COMPUTER. SPRINGER INTERNATIONAL PUBLISHING, 27. August 2013, 50-58